# EUROPÄISCHE PATENTSCHRIFT

(11) **EP 1 137 141 B1**
(45) Veröffentlichungstag und Bekanntmachung des Hinweises auf die Patenterteilung: **11.10.2006**
(21) Anmeldenummer: 01106715.4
(22) Anmeldetag: 16.03.2001
(51) Int. Cl.: H02G 3/08, H02G 3/30, H02B 1/052

(54) **Vorrichtung zum lösbaren Befestigen eines Betriebsmittels zur Stromversorgung eines Leuchten enthaltenden Betriebsgerätes**
Device for the releasable fixing of electrical feeding means for an apparatus containing lights
Dispositif d'attache débrayable d'un moyen d'alimentation électrique pour appareillage contenant des lampes

(30) Priorität: 17.03.2000 DE 20004982 U
(43) Veröffentlichungstag der Anmeldung: 26.09.2001
(73) Patentinhaber: TridonicAtco GmbH & Co. KG, 6851 Dornbirn (AT)
(72) Erfinder: Held, Wolfgang, 6971 Hard (AT)
(74) Vertreter: Rupp, Christian

(56) Entgegenhaltungen:
- EP-A- 0 813 269
- EP-A- 0 883 209
- GB-A- 1 530 191
- NL-A- 8 304 219
- US-A- 5 842 889

## Beschreibung

Die Erfindung bezieht sich auf eine Vorrichtung zum lösbaren Befestigen eines Betriebsmittel zur Stromversorgung von Leuchten enthaltenden Betriebsgerätes.

Ein Betriebsmittel zur Stromversorgung von Leuchten enthaltendes Betriebsgerät wird für eine Einzelversorgung einer Leuchte an der Leuchte selbst befestigt, z.B. an einem der Befestigung der Leuchte dienenden sog. Basisteil. Bekannte Befestigungsmaßnahmen für das Betriebsgerät bestehen darin, es durch Schrauben zu befestigen. Dies ist aufwendig im Hinblick auf die Herstellung, Montage, Demontage und Reparatur.

Eine hierzu alternative Lösung ist aus der GB 1 530 191 A bekannt. Diese Schrift beschreibt einen Adapter, der zur Montage elektronischer Geräte auf eine Vielzahl unterschiedlich ausgestalteter Tragschienen aufgeklipst werden kann. Der Adapter besteht aus zwei Außenarmen sowie zwei dazwischen angeordneten weiteren Armen. Durch die besondere Anordnung verschiedener Vorsprünge und Hinterschneidungen an den vier Armen kann der Adapter mit verschieden gestalteten Schienen verrastet werden, wie dies in den Figs 2 bis 4 der GB 1 530 191 A dargestellt ist.

Bei diesem bekannten Adapter ist der rechte Außenarm starr ausgebildet, während hingegen der linke Außenarm flexibel ist. Beim Verrasten des Adapters mit den verschiedenen Tragschienen wird dann der linke Außenarm ausgelenkt, woraufhin ein entsprechender Vorsprung der Schiene in eine an diesem Arm vorgesehene Ausnehmung eingreifen kann.

Ferner ist aus der EP 0 883 209 A1 ein Schnellmontagesockel zur Befestigung eines elektrischen Bauteils an einer Tragschiene bekannt, bei welcher das Bauteil mittels einer Kippbewegung und einer anschließenden Relativverschiebung in eine Arretierungsposition gebracht werden kann. Mit Hilfe eines speziellen Haltefederdrahts wird das elektrische Bauteil dann in der Arretierungsposition gehalten.

Ausgehend von diesem Stand der Technik liegt der Erfindung die Aufgabe zugrunde, eine Vorrichtung der eingangs angegebenen Art so auszugestalten, daß bei Gewährleistung einer hinreichenden Stabilität eine einfache und schnelle Montage bzw. Demontage möglich ist.

Diese Aufgabe wird durch die Merkmale des Anspruches 1 gelöst. Vorteilhafte Weiterbildungen der Erfindung sind in den Unteransprüchen beschrieben.

Die erfindungsgemäße Ausgestaltung ist von stabiler Bauweise, weil die die Hinterschneidungen aufweisenden Körperteile des Betriebsgerätes unbeweglich sind und in einfacher Weise stabil und belastbar ausgebildet werden können. Dabei ist es möglich, das Betriebsgerät quer zur Eingriffsebene bzw. quer zu den Trägerelementen zu montieren bzw. zu demontieren, wobei es in einer bezüglich der Eingriffsebene geringfügig gekippten Position in die Eingriffsebene geschwenkt wird und dann durch eine Relativverschiebung in der Eingriffsebene in eine beide Hinterschneidungen hintergreifende Position einsetzbar ist. In dieser Position ist das Betriebsgerät quer zur Eingriffsebene formschlüssig in den Hinterschneidungen gehalten, da es beide Hinterschneidungen hintergreift. Zur Sicherung des Betriebsgerätes gegen eine relative Rückverschiebung in der Eingriffsebene und/oder gegen eine Realtivverschiebung längs der Mittelachse der Hinterschneidungen ist ein Sicherungselement vorgesehen, das einteilig am Betriebsgerät angeordnet ist und kraftschlüssig oder formschlüssig mit dem Betriebsgerät und der Befestigungsbasis zusammenwirkt. Hierdurch eignet sich die erfindungsgemäße Ausgestaltung auch für langgestreckte Befestigungsbasen, z.B. in Form einer Schiene oder eine Hutschiene.

Zum Lösen des elektrischen Bauteils erfolgen die vorbeschriebenen Bewegungen in umgekehrter Reihenfolge. Dies kann dadurch geschehen, daß das Betriebsgerät zunächst durch eine relative Rückverschiebung in die Eingriffsposition gebracht wird und dann durch eine Schwenkbewegung bzw. durch Kippen aus der betreffenden Hinterschneidung herausbewegt wird.

Bei der erfindungsgemäßen Ausgestaltung kann das Betriebsgerät z.B. als Sockel oder Gehäuse ausgebildet sein, an bzw. in dem elektrische Bauteile, die Betriebsmittel zur Stromversorgung von Leuchten enthalten, z.B. Transformatoren, oder sonstige elektrische Funktionsbauteile, z.B. ein Brandmelder, befestigt bzw. gehalten sind. Die erfindungsgemäße Ausgestaltung eignet sich insbesondere für Leuchten, Schaltschränke oder auch Haushaltsmaschinen.

Nachfolgend werden die Erfindung und weitere durch sie erzielbare Vorteile anhand von bevorzugten Ausgestaltungen und Zeichnungen näher erläutert. Es zeigt:
- Fig.: 1 eine Vorrichtung zum Befestigen eines Betriebsgeräts, insbesondere mit wenigstens einer Zugentlastungsvorrichtung für ein Kabel, in der Unteransicht;
- Fig. 2: die Vorrichtung im Querschnitt nach der Schnittlinie II-II in Fig. 1;
- Fig. 3: das Betriebsgerät in der Seitenansicht,
- Fig. 4: das Betriebsgerät nach Fig. 2 in abgewandelter Ausgestaltung,
- Fig. 5: das Betriebsgerät nach Fig. 2 in weiter abgewandelter Ausgestaltung.

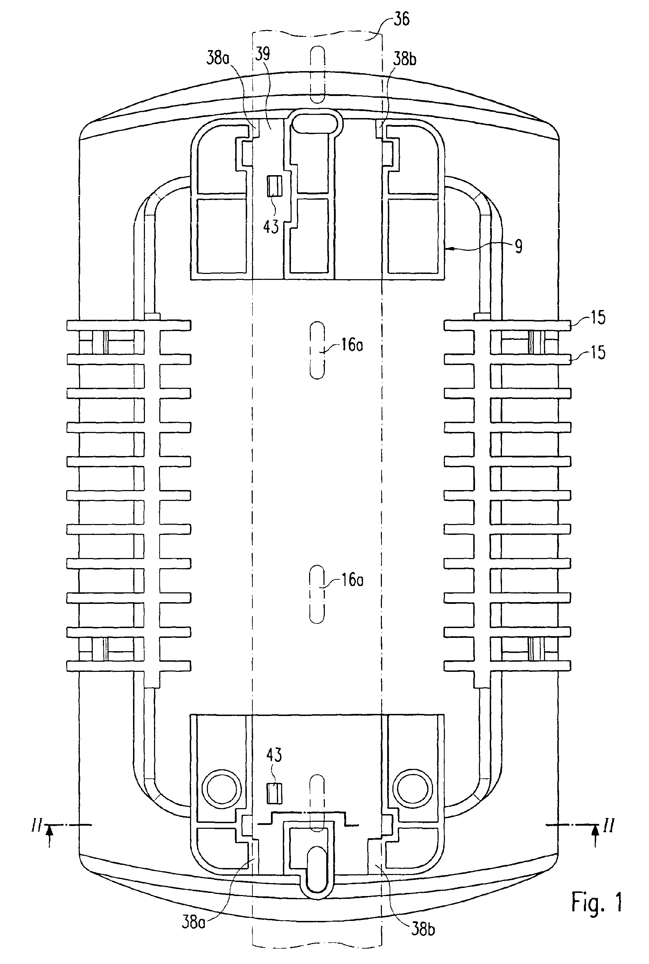

Bei dem in seiner Gesamtheit mit 1 bezeichneten Betriebsgerät kann es sich um ein Betriebsgerät zum Halten oder Durchführen oder Anschließen eines nur in Fig. 1 andeutungsweise im Schnitt dargestellten Kabels 2 dienen. Beim vorliegenden Ausführungsbeispiel dient das Betriebsgerätes 1 zum Anschließen des Kabels 2 an ein elektrisches Betriebsgerät, z.B. an einen Transformator, das am Betriebsgerät ebenfalls positionierbar ist, vorzugsweise in einem Gehäuse 3 des Betriebsgerätes 1. Das nicht dargestellte elektrische Betriebsgerät kann an eine Kammer des Gehäuses 3 angepaßt und darin aufgenommen und formschlüssig positioniert sein. Das Gehäuse 3 weist die Form eines länglichen und flachen Kastens auf, dessen Höhe H kleiner ist als dessen Breite B und dessen Breite B kleiner ist als dessen Länge L. Das Gehäuse 3 besteht aus zwei Teilen, z.B. aus einem Gehäuseunterteil 3a und einem Gehäusedeckel 3b, wobei eine zugehörige Teilungsfuge 4 bezüglich einer Bodenwand 5 horizontal verläuft, beim vorliegenden Ausführungsbeispiel im Bereich der Umfangswand 6 etwa in deren mittleren Höhe. Hierdurch erhalten das Unterteil und das Oberteil 3a,3b, jeweils die Form einer Schale. Zur seitlichen Positionierung und Abdichtung des Unterteils und des Oberteils 3a,3b ist an einem der beiden Umfangsränder, hier am oberen Umfangsrand, ein vertikaler Randsteg 7 angeformt, der etwa schließend in eine Randausnehmung 8 am anderen Umfangsrand einfaßt.

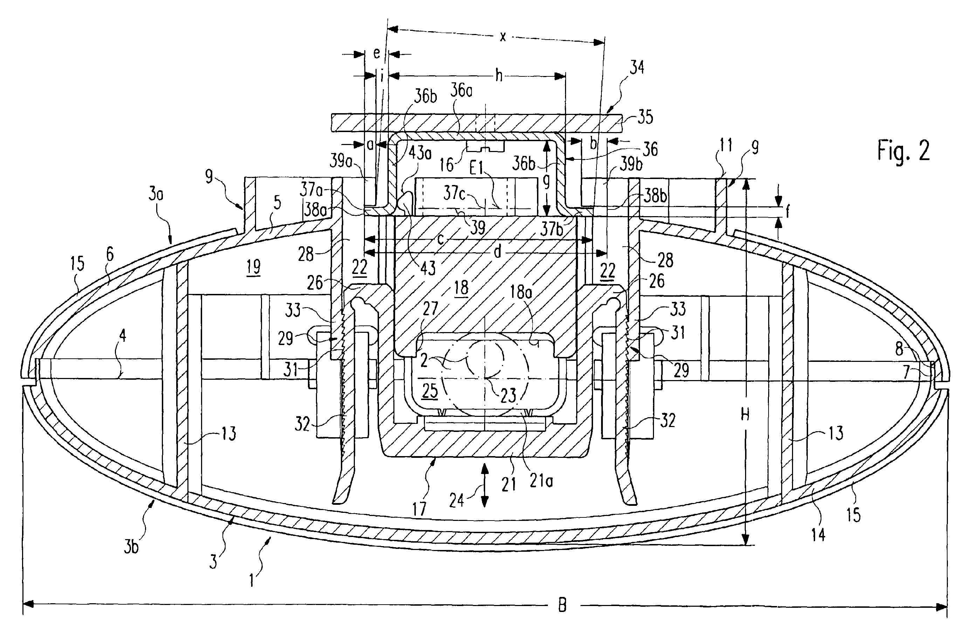

Beim vorliegenden Ausführungsbeispiel weist das Gehäuse 3 im vertikalen Längsschnitt gemäß Fig. 1 eine etwa rechteckige Querschnittsform ggf. mit gerundeten Ecken auf. Im vertikalen Querschnitt gemäß Fig. 2 kann die Querschnittsform des Gehäuses 3 ellipsenförmig sein. Bei dieser Ausgestaltung kann unterseitig an der Bodenwand 5 wenigstens ein Sockel 9 angeformt sein, der eine Anlagefläche 11 bilden kann. Der Sockel 9 kann aus mehreren hohlen Teilen bestehen. Die Kammer 12 zur Aufnahme des elektrischen Betriebsgerätes, hier eines Transformators, kann durch vom Unterteil 3a hochragende oder vom Oberteil 3b herunterragende Längs- und/oder Querwände 13 begrenzt sein. Insbesondere im Bereich der Kammer 12 können an der Bodenwand 5 und/oder an der Deckenwand 14 des Gehäuses 3 außenseitig Rippen 15 angeformt sein, die die Oberfläche vergrößern und die Wärmeabgabe nach außen verbessern. Die Rippen 15 können sich in der quer verlaufenden Umfangsrichtung erstrecken und sind insbesondere im längs gerichteten Bereich der Kammer 12 angeordnet.

Im Bereich eines oder beider Längsenden ist im Gehäuse 3 jeweils ein Kabel-Durchführungsloch 16, z.B. in der Bodenwand 5, und eine Zugentlastungsvorrichtung 17 zur zugentlasteten Befestigung des zugehörigen Kabels 2 am Betriebsgerät 1 vorgesehen. Hierdurch sind ein Kabeleingang und ein Kabelausgang im Gehäuse 3 gebildet. Die Zugentlastungsvorrichtungen 17 sind im Querschnitt, z.B. gemäß Fig. 2, vorzugsweise mittig angeordnet und insbesondere gleich ausgebildet, so daß die nachfolgende Beschreibung nur einer Zugentlastungsvorrichtung 17 ausreicht, um das Betriebsgerät 1 diesbezüglich hinreichend zu beschreiben.

Wie sich deutlich aus Fig. 2 entnehmen läßt, weist die Zugentlastungsvorrichtung 17 eine Basis 18, die innenseitig an der Bodenwand 5 angeordnet ist und vorzugsweise in den freien Innenraum 19 des Gehäuses 3 hineinragt, und ein Klemmteil 21, das in einer die Basis 18 überbrückenden Position angeordnet ist und in einer Führung, hier in zwei seitlichen Führungen 22 quer zur Längsmittelachse 23 des Gehäuses 3 in Richtung auf die Basis 18 und zurück verschiebbar geführt ist. Die Basis 18 und das Klemmteil 21 sind jeweils durch Querstege gebildet, die an ihren einander zugewandten Seiten Klemmkanten oder Klemmstege 18a, 21a aufweisen können. Die vorbeschriebene Verschieberichtung ist durch den Doppelpfeil 24 verdeutlicht und beim vorliegenden Ausführungsbeispiel quer zur Ebene der Teilungsfuge 4 gerichtet. Der wirksame Abstand a, mit dem die Basis in den freien Innenraum 19 hineinragt, ist vorzugsweise so groß bemessen, daß ein auf den Klemmrand der Basis 18 angeordnetes Kabel 2 sich im mittleren Bereich des Gehäuses 3 befindet. Abweichungen von einer exakten mittleren Position sind dadurch vorgegeben, daß Kabel 2 unterschiedlicher Querschnittsgröße vorhanden sein können, wie es Fig. 2 andeutungsweise zeigt, bei der zwei Kabel zwei unterschiedlicher Querschnittsgrößen dargestellt sind.

Zwischen der Basis und dem Klemmteil 21 ist eine vorzugsweise rinnenförmige Kabel-Aufnahme 25 gebildet, die seitlich von zwei Führungsstegen 26, die sich vom Klemmteil 21 in Richtung auf die Basis 18 erstrecken, und ggf. durch die seitlichen Ränder einer Ausnehmung 27 in der Basis 18 begrenzt. Die Führungsstege 26 fassen mit geringem Bewegungsspiel jeweils in ein seitliches Führungsloch 28 in oder am Basisteil 18 ein, wodurch zwei seitliche bzw. eine gemeinsame Führung für das Klemmteil 21 gebildet ist.

Den seitlichen Führungsstegen 26 ist jeweils in den Führungslöchern 28 eine lösbare Verrastungsvorrichtung 29 zugeordnet, die mit einem lösbaren Zahneingriff 31 zwischen einem quer zur Verschieberichtung schwenkbaren Schenkel 32 der Führungsstege 26 und einer gegenüberliegenden Wand 33 der Führungslöcher 28 wirksam ist. Durch ein vorzugsweise aufeinanderzu gerichtetes manuelles Schwenken der Schenkel 32 lassen sich die Zahneingriffe 31 und die Verrastungsvorrichtungen 29 lösen. Eine gewünschte Verrastung des Klemmteils 21 erfolgt selbsttätig, wenn es manuell oder mittels eines Werkzeugs in Richtung auf die Basis 18 verschoben wird, wobei es beim Vorhandensein eines Kabels 2 in einer Klemmstellung verrastet.

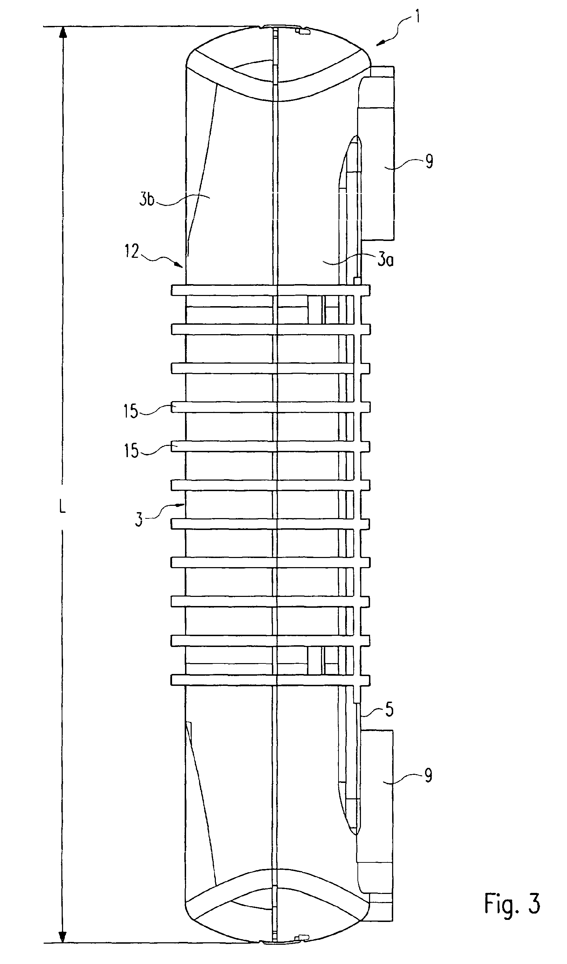

Das Betriebsgerät 1 ist durch eine in ihrer Gesamtheit mit 34 bezeichnete Befestigungsvorrichtung an einem geeigneten Träger 35 lösbar befestigt, der aus Vereinfachungsgründen nur in Fig. 3 andeutungsweise dargestellt ist. Bei einem solchen Träger 35 kann es sich um ein elektrisches Gerät, z.B. um eine Leuchte, ein Haushaltsgerät oder einen Schaltschrank handeln, an bzw. in dem das Betriebsgerät 1 zu befestigen ist, um ein elektrisches Betriebsmittel z.B. den Transformator zu positionieren.

Die Vorrichtung 34 umfaßt eine Tragschiene 36 mit voneinander weg abstehenden Trägerelementen in Form von Rändern 37a, 37b und einander gegenüberliegende Hinterschneidungen 38 am Betriebsgerät 1. Die Hinterschneidungen 38a, 38b sind vorzugsweise seitlich in einer gemeinsamen Nut 38 am Betriebsgerät 1 angeordnet. Die Hinterschneidungen 38a, 38b sind von seitlichen Vorsprüngen 39a, 39b überdeckt, die sich nicht über die gesamte Länge des Betriebsgerätes 1 erstrecken müssen, sich jedoch über die gesamte Länge erstrecken können. Wie am besten aus Fig. 1 zu entnehmen ist, genügen vorzugsweise in den Endbereichen des Betriebsgerätes 1 angeordnete Vorsprünge 39a, 39b, die vorzugsweise quer einander gegenüberliegen.

Zur Befestigung der Tragschiene 36 am Träger 35 können andeutungsweise dargestellte Schrauben 16 dienen, die die Tragschiene 36 in Durchgangslöchern 16a quer durchsetzen, die vorzugsweise durch Langlöcher gebildet sind, die sich in der Längsrichtung der Tragschiene 36 erstrecken, wie es in Fig. 1 andeutungsweise dargestellt ist. Die Tragschiene 36 ist vorzugsweise durch eine sog. Hutschiene gebildet, d.h. eine Schiene U-förmigen Querschnitts, z.B. mit einer Basiswand 36a, von der sich zwei Schenkel 36b erstrecken, an denen sich die quer nach außen abstehenden Ränder 37a, 37b vorzugsweise als Profil fortsetzen. Die in Fig. 2 links angeordnete Hinterschneidung 38a weist eine geringere Breite a auf, als die Breite b der anderen Hinterschneidung 38b. Die Gesamtbreite c der Ränder 37a, 37b ist kleiner bemessen als die Gesamtbreite d der Hinterschneidungen 38a, 38b abzüglich der Breite e der breiteren Hinterschneidung 38b. Die von den Schenkeln 36b abstehende Breite b der Ränder 37a, 37b, die vorzugsweise gleich ist, ist größer als die Breite b der größeren Hinterschneidung 38b. Die Dicke der Ränder 37 ist unter Berücksichtigung eines Bewegungsspiels kleiner bemessen als die Tiefe f der Hinterschneidungen 38a, 38b. Die Tiefe g der hutförmigen Tragschiene 36 ist größer bemessen, als im Bereich der Nut 39 bzw. zwischen den Hinterschneidungen 38a, 38b angeordnete Elemente des Betriebsgerätes 1, die von der Basiswand 36a überbrückt werden. In dem Fall, in dem die Befestigung der Tragschiene 36 am Träger 35 durch vom Hohlraum 27 eingesteckte Kopfschrauben erfolgt, ist die Tiefe g vorzugsweise größer zu bemessen als die Summe der Höhe der vorgenannten Elemente und der Kopfhöhe der Schrauben.

Bei dieser Ausgestaltung ergibt sich zwischen der Seitenfläche der Hinterschneidung 38b und dem ihr zugewandten Rand des gegenüberliegenden Vorsprungs 39a ein mit x bezeichnetes Maß, das kleiner ist als die Gesamtbreite d der Ränder 38a, 38b. Hierdurch ist es möglich, die Tragschiene 36 oder das Betriebsgerät 1 aus einer der Schräglage der Maßlinie des Maßes x entsprechenden gekippten Stellung ungefähr in eine Stellung zu schwenken bzw. zu kippen, in der sich die Ränder 37a, 37b in einer durch die Hinterschneidungen 38a, 38b verlaufenden Eingriffsebene E1 befinden, wobei sie beim vorliegenden Ausführungsbeispiel am Grund der Nut 39 anliegen. Hierdurch ist eine Eingriffsposition zwischen dem Betriebsgerät 1 und der Tragschiene 36 gegeben. Aus dieser Eingriffsposition können diese Teile durch Relatiwerschiebung in der Eingriffsebene E1 oder parallel dazu in eine Arretierungsposition gebracht werden, in der beide Ränder 37a, 37b in die Hinterschneidungen 38a, 38b einfassen. In dieser Arretierungsposition sind die beiden Betriebsgeräte quer zur Eingriffsebene E1 formschlüssig aneinander gehalten. Es ist von Vorteil, wenn der Rand 37a in der Arretierungsposition vollends in die zugehörige Hinterschneidung 38a eingeschoben ist, wie es Fig. 2 zeigt. In dieser Arretierungsposition faßt der andere Rand 37b in die Hinterschneidung 38b ein, bzw. er wird vom Vorsprung 39b übergriffen, wodurch die formschlüssige Halterung quer zur Eingriffsebene E1 geschaffen ist. Sowohl in der vorbeschriebenen mittleren Arretierungsposition als auch in der völlig in die Hinterschneidung 38a einfassenden Arretierungsposition (Fig. 2) ist somit quer zur Eingriffsebene E1 eine formschlüssige Halterung zwischen der Tragschiene 36 und dem Betriebsgerätes 1 gegeben. Insbesondere in einer Einbaustellung der Vorrichtung 34, in der sich die Tragschiene 36 horizontal erstreckt, wobei sich der Rand 37a über dem Rand 37b oder oben befindet, ist eine sicher funktionierende Vorrichtung 34 geschaffen, weil aufgrund der Schwerkraft des Betriebsgerätes 1 der Eingriff des Randes 37a in die Hinterschneidung 38a gesichert ist. Längs der Mittelachse 37c kann zur Verhinderung einer Verschiebung längs der Mittelachse der Hinterschneidungen 38a, 38b ein Sicherungselement vorgesehen sein, das formschlüssig oder kraftschlüssig mit den beiden Betriebsgeräten zusammenwirkt. Es können auch eine solche Längsverschiebung hindernde Anschläge an der Tragschiene 36 vorgesehen sein. Die erfindungsgemäße Ausgestaltung eignet sich jedoch auch für andere als schienenförmige Träger, z.B. entsprechend kurze Tragstücke anstelle einer Tragschiene 36.

Ein Lösen der Tragschiene 36 und des Betriebsgerätes 1 voneinander erfolgt mit umgekehrten Bewegungen. Zunächst werden die Befestigungsteile durch eine Relatiwerschiebung in oder parallel zur Eingriffsebene E1 in die Eingriffsposition gebracht, in der der Rand 37a sich außerhalb der Hinterschneidung 38a befindet. In dieser Eingriffsstellung kann durch ein Kippen und ggf. zugleich ein Herausziehen des Randes 37b aus der Hinterschneidung 38b eine Trennung bzw. Demontage der Befestigungsteile herbeigeführt werden.

Zur Sicherung der Befestigungsteile in der Arretierungsposition quer und/oder längs der Mittelachse 37c der Hinterschneidungen 38a, 38b ist ein Sicherungselement 43 vorgesehen, das die Befestigungsteile längs und/oder quer zur Mittelachse 37c so aneinander fixiert, daß eine Bewegung vorzugsweise formschlüssig verhindert ist. Hierzu kann ein Sicherungsstift dienen, der in der Arretierungsstellung in Position bringbar ist, z.B. in ein Stiftloch steckbar ist, in der der eine Bewegung des Randes 37a aus der Hinterschneidung 38a vorzugsweise formschlüssig verhindert. Es kann sich auch um ein Sicherungselement 43 handeln, das z.B. gegen eine Rückstellkraft aus einer Sicherungsstellung in eine Freigabestellung bewegbar ist und sich selbsttätig in seine Sicherungsstellung zurückbewegt. Besonders vorteilhaft ist ein elastisch nachgiebiges oder auslenkbares Sicherungselement 43, das beim Bewegen der Befestigungsteile in die Eingriffsposition durch eines der Befestigungsteile in seine Freigabestellung gedrückt wird und aufgrund seiner vorzugsweise auf Eigenelastizität beruhenden elastischen Rückstellkraft der Befestigungsteile in der Arretierungsposition sichert. Um das Wegdrücken des Sicherungselementes 43 oder Sicherungsstiftes zu ermöglichen oder zu erleichtern, ist an ihm und/oder am mit ihm in Kontakt tretenden Gegenstück eine schräge oder gerundete Anlauffläche 43a angeordnet. Diese Funktion kann wenigstens ein Sicherungselement 43 ausüben. Beim vorliegenden Ausführungsbeispiel sind zwei Sicherungselemente 43 in den Endbereichen des Befestigungsteils 1 vorgesehen. Sie befinden sich im Hohlraum der Hutschiene 36 und sind dadurch nicht nur verdeckt angeordnet und in der Montagestellung unzugänglich, sondern diese Ausgestaltung eignet sich auch aus konstruktiven Gründen besonders vorteilhaft, da die Innenwand des zugehörigen Schenkels 36b des Betriebsgeräts 1 mit dem Sicherungsteil 43 vorteilhaft zusammenwirken kann. Das Sicherungsteil 43 kann ein Stift sein, der in der Sicherungsstellung vom Grund der Nut 39 in einer solchen Position absteht, daß beim relativen Einkippen der Hutschiene 36 der zugehörige Schenkel 36b den Stift in seine Freigabestellung seitlich wegdrückt bzw. kippt. In der Eingriffsstellung in der die Ränder 37a, 37b sich in der Eingriffsebene E1 befinden, wird dann die Hutschiene 36 durch die elastische Rückstellkraft des Stiftes in die Hinterschneidung 38a gedrückt, in der die Arretierungsstellung erreicht ist, die der Stift weiterhin sichert. Beim umgekehrt erfolgenden Lösen wird der Stift manuell überdrückt.

Die Außenbreite h der Schenkel 36b ist so groß bemessen, daß zwischen den Schenkeln 36a, 36b und den Vorsprüngen 39a, 39b Abstände i bzw. Freiräume vorhanden sind, die die Relativverschiebung ermöglichen.

Es ist zwecks kostengünstiger Fertigung außerdem vorteilhaft, die Einzelteile des Betriebsgerätes oder die Blendenwand durch Druckgießen oder Spritzgießen, z.B. aus Aluminium oder Kunststoff, zu fertigen.

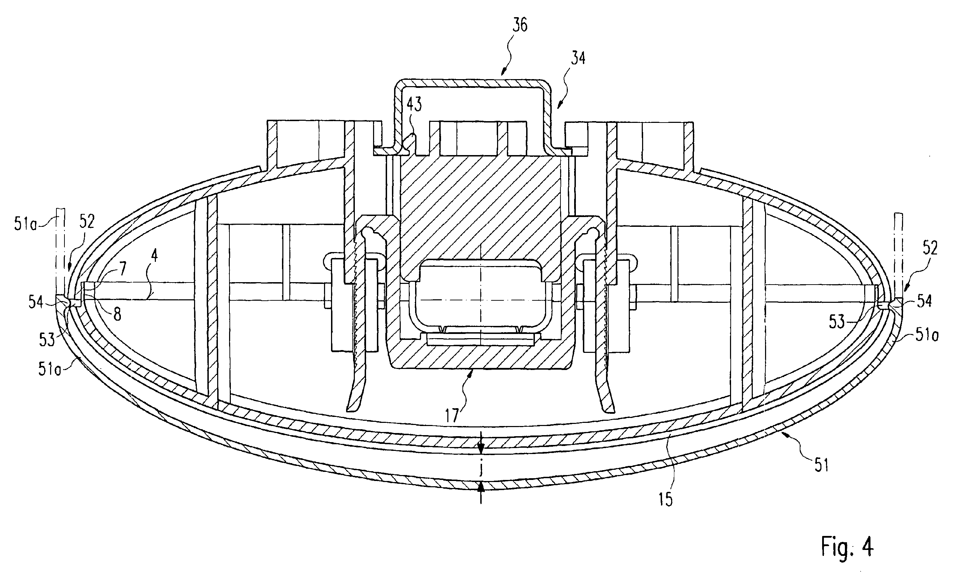

Es ist im übrigen vorteilhaft, dem Betriebsgerät 1 eine Blende 51 zuzuordnen, die es zur Sichtseite hin abdeckt und somit den Blicken von der Sichtseite her entzieht, wodurch das Aussehen des Betriebsgerätes 1 verbessert wird. Die Blende 51 ist durch eine manuell überdrückbare Schnappverbindung 52 lösbar mit dem Betriebsgerät 1 verbunden, wobei es sich um eine Verrastungsvorrichtung oder eine Klemmvorrichtung handeln kann. Die vorliegende Ausgestaltung des Betriebsgeräts 1 mit einem Gehäuse 3, das im Querschnitt gerundete Seitenbereiche aufweist und/oder im Bereich der Teilungsfuge 4 einen Spalt 53 aufweist, eignet sich für eine Rastverbindung besonders gut. Die im Querschnitt U-förmig gerundet oder U-förmig eckig ausgebildete Blende 51 kann an den Innenseiten ihrer Seitenwände 51a in einer Längsreihe angeordnete Nocken 54 oder längs verlaufende Wülste angeformt aufweisen, die in die Spalte 53 einrasten und zum Lösen manuell überdrückbar sind. Dies wird durch einen Querabstand der Nocken 54 voneinander ermöglicht, der in der entspannten Ausgangsstellung der Seitenwände 51a etwas kleiner ist als der Querabstand der Spaltöffnungen voneinander (Fig. 4). Die Seitenwände 51a können sich bis zu den Nocken 54 oder darüber erstrecken, z.B. bis in den Bodenbereich.

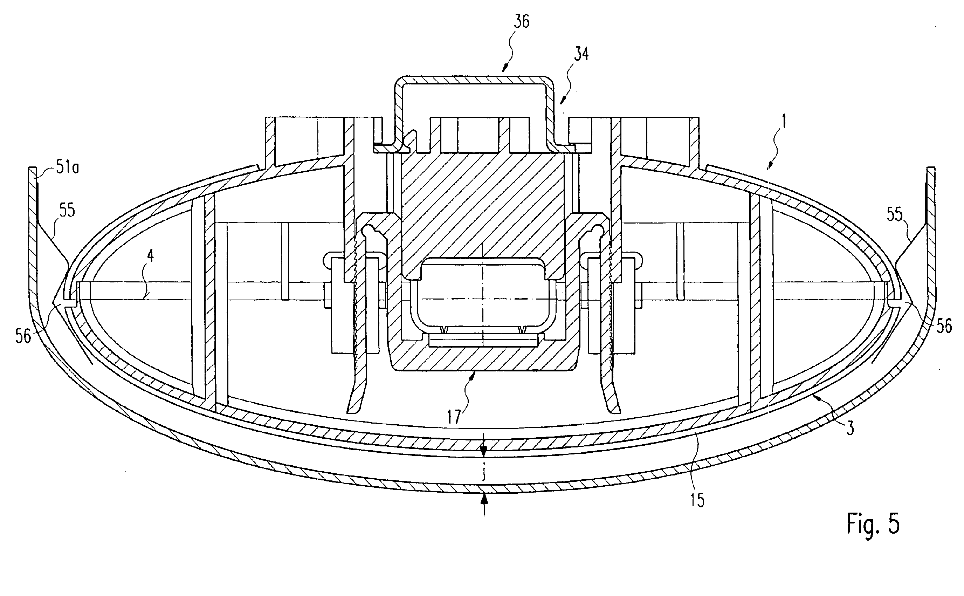

Bei der Ausgestaltung nach Fig. 5 ist die Verrastungsvorrichtung durch innen an den Seitenwänden 51a befestigte Federn, insbesondere Blattfedern 55, gebildet. Diese weisen durch insbesondere divergente Flanken gebildete Ausnehmungen 56 auf, mit denen sie auf die seitlichen Rundungen des Gehäuses aufschnappen.

Insbesondere für ein Betriebsgerät für einen Transformator ist es vorteilhaft, wenn die Blende 51 einen Abstand j vom Betriebsgerät 1 aufweist. Hierdurch wird aufgrund von Konvektion bzw. Kaminwirkung eine vorteilhafte Luftkühlung erreicht.

## Patentansprüche

1. Vorrichtung (34) zum lösbaren Befestigen eines Betriebsmittel zur Stromversorgung von Leuchten enthaltenden Betriebsgerätes (1) an einer Befestigungsbasis, aufweisend
a) zwei am Betriebsgerät (1) und sich in einer Eingriffsebene (E1) oder parallel zu dieser erstreckende Hinterschneidungen (38a,38b) sowie
b) zwei ggf. miteinander verbundene und an der Befestigungsbasis anzubringende Trägerelemente (37a, 37b), welche zum Hintergreifen je einer Hinterschneidung (38a, 38b) bestimmt sind,
wobei die Abmessungen der Trägerlemente (37a, 37b) und Hinterschneidungen (38a, 38b) sind so gewählt, daß sie einerseits durch eine Kippbewegung zwischen dem Betriebsgerät (1) und den Trägerelementen (37a, 37b) in eine Eingriffsposition bringbar sind und daß sie andererseits durch Relativverschiebung in der Eingriffsebene (E1) oder parallel zu dieser von der Eingriffsposition in eine Arretierungsposition bringbar sind, und umgekehrt, und wobei ein Sicherungselement (43) zum Sichern der Trägerelemente (37a, 37b) und des Betriebsgerätes (1) aneinander in der Arretierungsposition vorgesehen ist,
**dadurch gekennzeichnet,**
**daß** das Sicherungselement (43) am Betriebsgerät (1) einteilig angeformt ist.

2. Vorrichtung nach Anspruch 1,
**dadurch gekennzeichnet,**
**daß** die Trägerelemente (37a, 37b) durch sich voneinanderweg erstreckende Zapfen oder Stege gebildet sind.

3. Befestigungsvorrichtung nach Anspruch 2,
**dadurch gekennzeichnet,**
**daß** die Stege durch die Ränder einer Tragschiene (36), insbesondere einer Hutschiene, gebildet sind.

4. Vorrichtung nach einem der vorherigen Ansprüche,
**dadurch gekennzeichnet,**
**daß** die Hinterschneidungen (38a, 38b) am Betriebsgerät (1) angeordnet sind, insbesondere an dessen Breitseite.

5. Vorrichtung nach einem der vorherigen Ansprüche,
**dadurch gekennzeichnet,**
**daß** die Hinterschneidungen (38a, 38b) in einer Nut (39) angeordnet sind.

6. Vorrichtung nach Anspruch 5,
**dadurch gekennzeichnet,**
**daß** das Sicherungselement (43) in der Nut (39) angeordnet ist.

7. Vorrichtung nach einem der Ansprüche 1 bis 6,
**dadurch gekennzeichnet,**
**daß** das Sicherungselement (43) die Trägerelemente (37a,37b) und das Betriebsgerät (1) auch in der Längsrichtung der Mittelachse (37c) der Hinterschneidungen (38a,38b) aneinander sichert.

8. Vorrichtung nach einem der Ansprüche 1 bis 7,
**dadurch gekennzeichnet,**
**daß** das Sicherungselement (43) so angeordnet ist, daß es beim Kippen in die Eingriffsstellung durch Körperteile der Tragschiene (36) gegen eine Rückstellkraft in eine Freigabestellung gedrückt wird, und die Rückstellkraft die Tragschiene (36) in die Arretierungsstellung beaufschlagt.

9. Vorrichtung nach Anspruch 8,
**dadurch gekennzeichnet,**
**daß** das Sicherungselement (43) in die Freigabestellung verformbar, insbesondere biegbar, ist und die Rückstellkraft durch Eigenelastizität des Sicherungselementes (43) erzeugt wird.

10. Vorrichtung nach einem der vorherigen Ansprüche,
**dadurch gekennzeichnet,**
**daß** die Gesamtbreite (d) der Hinterschneidungen abzüglich der Breite (a) einer ersten Hinterschneidung (38a) größer ist als die Breite (c) der Tragelemente (37a, 37b),
**daß** die Breite (b) der zweiten Hinterschneidung (38b) größer ist als die Differenz zwischen der Gesamtbreite (d) der Hinterschneidungen (38a, 38b) und der Breite (c) der Tragschiene (36).

## Claims

1. Device (34) for the releasable attachment of an operating means for current supply of operating apparatus (1) containing luminaires, to an attachment base, having
a) two undercuts (38a, 38b) on the operating apparatus (1), extending in an engagement plane (E1) or parallel to this, and
b) two carrier elements (37a, 37b), which may be connected with one another, to be mounted on the attachment base, which are provided for engaging each behind one of the undercuts (38a, 38b),
wherein the dimensions of the carrier elements (37a, 37b) and undercuts (38a, 38b) are so selected that on the one hand they can be brought by means of a tilting movement between the operating apparatus (1) and the carrier elements (37a, 37b) into an engagement position and in that on the other hand they can be brought from the engagement position into an arresting position, and vice versa, by means of relative displacement in the engagement plane (E1) or parallel to this, and wherein there is provided a securing element (43) for securing the carrier elements (37a, 37b) and the operating apparatus (1) to one another in the arrested position,
**characterized in that**,
the securing element (43) is formed on the operating apparatus (1) in one piece.

2. Device according to claim 1,
**characterized in that**,
the carrier elements (37a, 37b) are formed by means of pins or webs extending away from one another.

3. Attachment device according to claim 2,
**characterized in that**,
the webs are formed by means of the edges of a carrier rail (36), in particular a top hat rail.

4. Device according to any preceding claim,
**characterized in that**,
the undercuts (38a, 38b) are arranged on the operating apparatus (1), in particular at its broad side.

5. Device according to any preceding claim,
**characterized in that**,
the undercuts (38a, 38b) are arranged in a groove (39).

6. Device according to claim 5,
**characterized in that**,
the securing element (43) is arranged in the groove (39).

7. Device according to any of claims 1 to 6,
**characterized in that**,
the securing element (43) secures to one another the carrier elements (37a, 37b) and the operating apparatus (1) also in the longitudinal direction of the middle axis (37c) of the undercuts (38a, 38b).

8. Device according to any of claims 1 to 7,
**characterized in that**,
the securing element (43) is so arranged that upon tilting into the engagement position it is pressed by body parts of the carrier rail (36) into a release position, against a return force, and the return force urges the carrier rail (36) into the arresting position.

9. Device according to claim 8,
**characterized in that**,
the securing element (43) is deformable into the release position, in particular bendable, and the return force is generated through self-elasticity of the securing element (43).

10. Device according to any preceding claim,
**characterized in that**,
the overall width (d) of the undercuts, less the width (a) of a first undercut (38a), is greater than the width (c) of the carrier elements (37a, 37b),
**in that** the width (b) of the second undercut (38b) is greater than the difference between the overall width (d) of the undercuts (38a, 38b) and the width (c) of the carrier rail (36).

## Revendications

1. Dispositif (34) pour une fixation amovible sur une base de fixation d'un moyen d'exploitation pour l'alimentation en courant d'appareil d'exploitation (1) renfermant des lampes, avec a) deux dégagements (38a, 38b) s'étendant sur l'appareil d'exploitation (1) sur un plan de prise (E1) ou parallèlement à celui-ci ainsi que b) deux moyens porteurs (37a, 37b) éventuellement reliés entre eux et à fixer sur la base de fixation, qui sont destinés à se positionner derrière respectivement un dégagement (38a, 38b), les dimensions des moyens porteurs (37a, 37b) et des dégagements (38a, 38b)) étant choisies de telle façon que d'une part ils puissent, par un mouvement de basculement entre l'appareil d'exploitation (1) et les moyens porteurs (37a, 37b), être déplacés dans une position de prise et que d'autre part ils puissent, par un déplacement relatif au plan de prise (E1) ou parallèlement à celui-ci, être déplacés de la position de prise jusque dans la position de verrouillage et inversement, et un moyen d'arrêt (43) étant prévu pour bloquer entre eux dans la position de verrouillage les moyens porteurs (37a, 37b) et l'appareil d'exploitation(1), **caractérisé en ce que** le moyen d'arrêt (43) est formé d'une seule pièce sur l'appareil d'exploitation (1).

2. Dispositif selon la revendication 1, **caractérisé en ce que** les moyens porteurs (37a, 37b) sont formés par des tourillons ou des nervures qui s'étendent de manière à s'éloigner entre eux.

3. Dispositif de fixation selon la revendication 2, **caractérisé en ce que** les nervures sont formées par les bords d'un rail porteur (36), en particulier un rail à chapeau.

4. Dispositif selon l'une quelconque des revendications précédentes, **caractérisé en ce que** les dégagements (38a, 38b) sont disposés sur l'appareil d'exploitation (1), en particulier sur son côté large.

5. Dispositif selon l'une quelconque des revendications précédentes, **caractérisé en ce que** les dégagements (38a, 38b) sont disposés dans une rainure (39).

6. Dispositif selon la revendication 5, **caractérisé en ce que** l'moyen d'arrêt (43) est disposé dans la rainure (39).

7. Dispositif selon l'une quelconque des revendications 1 à 6, **caractérisé en ce que** l'moyen d'arrêt (43) verrouille entre eux les moyens porteurs (37a, 37b) et l'appareil d'exploitation (1) également dans la direction longitudinale de l'axe central (37c) des dégagements (38a, 38b).

8. Dispositif selon l'une quelconque des revendications 1 à 7, **caractérisé en ce que** l'moyen d'arrêt (43) est disposé de telle façon que, lors du basculement dans la position de prise, il soit poussé par des parties de corps du rail porteur (36) contre une force de rappel dans une position de libération et **en ce que** la force de rappel met le rail porteur (36) en contrainte dans la position de verrouillage.

9. Dispositif selon la revendication 8, **caractérisé en ce que** l'moyen d'arrêt (43) peut être déformé, en particulier plié, pour atteindre la position de libération et **en ce que** la force de rappel est fournie par l'élasticité propre de l'moyen d'arrêt (43).

10. Dispositif selon l'une quelconque des revendications précédentes, **caractérisé en ce que** la largeur totale (d) des dégagements diminuée de la largeur (a) d'un premier dégagement (38a) est plus importante que la largeur (c) des moyens porteurs (37a, 37b) et **en ce que** la largeur (b) du deuxième dégagement (38b) est plus importante que la différence entre la largeur totale (d) des dégagements (38a, 38b) et la largeur (c) du rail porteur (36).
